# EUROPÄISCHE PATENTSCHRIFT

(11) **EP 3 846 630 B1**
(45) Veröffentlichungstag und Bekanntmachung des Hinweises auf die Patenterteilung: **09.04.2025**
(21) Anmeldenummer: 18765100.5
(22) Anmeldetag: 03.09.2018
(51) Int. Cl.: A22C 21/00, A22B 7/00

(54) **ANORDNUNG UND VERFAHREN ZUR GEFLÜGELFÖRDERUNG**
SYSTEM AND METHOD FOR POULTRY CONVEYING
SYSTÈME ET PROCÉDÉ POUR LE TRANSPORT DE VOLAILLE

(43) Veröffentlichungstag der Anmeldung: 14.07.2021
(60) Teilanmeldung: 24153430.4
(73) Patentinhaber: FPI Food Processing Innovation GmbH & Co. KG, 23556 Lübeck (DE)
(72) Erfinder: SCHLESIGER, Oliver, 23554 Lübeck (DE)
(74) Vertreter: Stork Bamberger Patentanwälte PartmbB
(86) Internationale Anmeldenummer: PCT/EP2018/073631
(87) Internationale Veröffentlichungsnummer: WO 2020/048582

(56) Entgegenhaltungen:
- EP-A1- 0 736 255
- EP-A1- 3 485 735
- EP-B1- 2 687 101
- WO-A1-2016/003271
- US-A- 5 453 045
- US-A1- 2008 125 025
- US-A1- 2015 366 227
- US-A1- 2016 021 902

## Beschreibung

Die vorliegende Erfindung betrifft eine Anordnung sowie ein Verfahren zur Übergabe von Schlachtgeflügel zwischen Förderlinien in einer Geflügelbearbeitungsanlage.

Derartige Anordnungen und Verfahren kommen in Anlagen zur Schlachtgeflügelförderung bzw. zur Schlachtgeflügelbearbeitung zum Einsatz. In der Regel umfassen derartige Anlagen eine Vielzahl unterschiedlicher Förder- und Bearbeitungslinien, an deren jeweiligen Schnittstellen eine Übergabe der Geflügelschlachtkörper von der einen Linie an eine andere Linie erforderlich ist.

Aus dem Dokument EP 2 687 101 B1 ist eine Verarbeitungseinrichtung für Geflügel mit einer Transfereinheit zum Überführen von Geflügelschlachtkörpern von einer Förderlinie an eine andere Förderlinie bekannt. Jede Transfereinheit umfasst einen umlaufenden Träger mit mehreren Transfermitteln. Durch Wechsel zwischen einem blockierten und einem blockadefreien Zustand laufen die Träger entweder synchron mit dem umlaufenden Träger mit oder werden von dieser umlaufenden Bewegung entkoppelt.

Ein Nachteil der bekannten Vorrichtung besteht darin, dass die Fördergeschwindigkeit der Transfermittel nur zwischen zwei Geschwindigkeiten variiert werden kann, nämlich so, dass sie entweder null ist oder der Geschwindigkeit des umlaufendes Trägers entspricht. Die bekannte Transfereinheit verfügt damit nur über einen stark eingeschränkten Einsatzbereich. Insbesondere bei auftretenden Schwankungen der Fördergeschwindigkeit einer der Förderlinien kann die Fördergeschwindigkeit der Transfermittel nicht entsprechend angepasst werden. Dies kann u. a. zu Übergabefehlern bei der Übergabe der Geflügelschlachtkörper von einer Förderlinie an die andere führen.

Die aus dem Dokument EP 2 687 101 B1 bekannten Transfermittel sind jeweils für die Aufnahme eines Geflügelschlachtkörpers eingerichtet. Hierzu weisen die Transfermittel entsprechende Aufnahmen auf, in die beide Beine eines jeden Geflügelschlachtkörpers eingehängt sind. Die Übergabe der Geflügelschlachtkörper erfolgt gemäß der Lehre der EP 2 687 101 B1 durch gleichzeitiges Umhängen beider Beine von der einen, abgebenden Förderlinie an die andere, aufnehmende Förderlinie. Aufgrund dieses Übergabeprinzips sind entsprechend weite Radien des umlaufenden Trägers zwingend erforderlich, um eine verlässliche Übergabe zu bewerkstelligen. Hierdurch sind der Wahlfreiheit hinsichtlich der Geometrie der Förderlinien enge Grenzen gesetzt.

Aus dem Dokument EP 0 736 255 A1 geht eine Fördereinrichtung hervor, das die Übergabe von Schlachtgeflügel zwischen Förderlinien in einer Geflügelbearbeitungsanlage offenbart. Diese umfasst eine Rundläufereinrichtung zur Hängeförderung von Schlachtgeflügel entlang einer gekrümmten Förderstrecke mit einer Mehrzahl von jeweils zum beidbeinigen Halten eines Geflügelkörpers eingerichteten Hängeaufnahmen, eine Linearmotor-Fördereinrichtung mit einer einen Linearantrieb umfassenden, eine umlaufende Förderstrecke bildenden Führungsschiene mit einer Mehrzahl entlang der Führungsschiene mittels des Linearantriebs jeweils angeordneten Läufern. Die Rundläufereinrichtung und die Linearmotor-Fördereinrichtung sind derart angeordnet, dass die gekrümmte Förderstrecke in einem Überführungsbereich mit einem Kurvenabschnitt der umlaufenden Förderstrecke zur Übergabe des Schlachtgeflügels zwischen den Förderlinien zumindest teilweise überlappt.

Es ist daher Aufgabe der vorliegenden Erfindung, eine Anordnung vorzuschlagen, die eine höchst zuverlässige Übergabe von Schlachtgeflügel zwischen Förderlinien gewährleistet, wobei die Förderlinien hinsichtlich ihrer Geometrie und Fördergeschwindigkeit eine größtmögliche Variabilität aufweisen. Des Weiteren besteht die Aufgabe darin, ein entsprechendes Verfahren vorzuschlagen.

Die Aufgabe wird durch eine Anordnung mit den eingangs genannten Merkmalen gelöst, wobei die Anordnung mindestens eine Rundläufereinrichtung zur Hängeförderung von Schlachtgeflügel entlang einer gekrümmten Förderstrecke mit einer Mehrzahl von jeweils zum beidbeinigen Halten eines Geflügelkörpers eingerichteten Hängeaufnahmen, eine Linearmotor-Fördereinrichtung mit einer einen Linearantrieb umfassenden, eine umlaufende Förderstrecke bildenden Führungsschiene mit einer Mehrzahl entlang der Führungsschiene mittels des Linearantriebs jeweils separat steuerbewegbar angeordneten Läufern sowie zur Aufnahme jeweils eines Geflügelbeines eingerichtete Halteelemente umfasst, wobei an jedem der Läufer jeweils eines der Halteelemente angeordnet ist, und wobei die Rundläufereinrichtung und die Linearmotor-Fördereinrichtung derart angeordnet sind, dass die gekrümmte Förderstrecke in einem Überführungsbereich mit einem Kurvenabschnitt der umlaufenden Förderstrecke zur Übergabe des Schlachtgeflügels zwischen den Förderlinien zumindest teilweise überlappt.

Die erfindungsgemäße Anordnung bietet gleich eine ganze Reihe von Vorteilen. Die Linearmotor-Fördereinrichtung bietet einen maximalen Grad an Variabilität hinsichtlich der Wahl der Fördergeschwindigkeiten und der Positioniermöglichkeiten. Die Fördergeschwindigkeiten bzw. Fördergeschwindigkeitsprofile sind für jeden der Läufer vorgebbar. Auf diese Weise kann die Fördergeschwindigkeit jedes Läufers individuell an die jeweiligen Gegebenheiten angepasst werden. Insbesondere ist es möglich, die Geflügelschlachtkörper anzuhalten, um Be- und/oder Verarbeitungsschritte an diesen durchzuführen.

Aufgrund der Einzelbeinförderung mittels jeweils eines separat steuerbewegbar eingerichteten Läufers findet eine Einzelbeinübergabe beim Übergeben der Geflügelschlachtkörper zwischen den Förderlinien statt. Auf diese Weise können in dem Überführungsbereich Kurvenabschnitte mit, gegenüber den aus dem Stand der Technik bekannten, deutlich reduzierten Kurvenradien realisiert werden. Ein weiterer Vorteil besteht darin, dass durch die flexible Geschwindigkeitswahl der Läufer die jeweiligen Geschwindigkeiten der Läufer an auftretende Fördergeschwindigkeitsschwankungen der Rundläufereinrichtung optimal anpassbar sind und so stets eine exakte und hoch zuverlässige Übergabe gewährleistet wird.

Eine zweckmäßige Ausgestaltung der Erfindung ist dadurch gekennzeichnet, dass die Linearmotor-Fördereinrichtung eine Steuereinrichtung umfasst, die zum steuervariablen Fördern jeweils eines Geflügelkörpers durch paarweises Bewegen eines Läuferpaares ausgebildet ist, wobei das Läuferpaar jeweils zwei benachbarte der Läufer umfasst. Mit anderen Worten bilden jeweils zwei der separat steuerbar eingerichteten und auf der Förderschiene benachbarten Läufer ein Läuferpaar, das eingerichtet ist, jeweils einen der Geflügelschlachtkörper zu fördern. Die jeweils benachbarten Läufer sind also steuerseitig miteinander gekoppelt. Beide der genannten Läufer bewegen sich also voneinander abhängig.

Weiter bevorzugt ist vorgesehen, den Abstand zwischen jeweils zwei benachbarten Läufern steuervariabel einzustellen. Durch die Variation des Abstandes der Läufer eines solchen Läuferpaares ist es möglich, die Vertikalausrichtung des Geflügelschlachtkörpers in gewissem Umfang zu verändern. Wird der Abstand vergrößert, so führt dies zu einem Heben des Geflügelkörpers, wird dieser verringert, zu einem Absinken. Auf diese Weise ist es möglich, den Geflügelschlachtkörper, beispielsweise für einen folgenden Bearbeitungsvorgang, optimal zu positionieren und auszurichten. Zudem besteht die Möglichkeit, den Geflügelschlachtkörper für bestimmte Bearbeitungsschritte mehr oder weniger stark vorzuspannen, um verbesserte Bearbeitungsergebnisse zu erzielen.

Gemäß einer vorteilhaften Weiterbildung ist vorgesehen, dass die Läufer jeweils Positionsverfolgungsmittel zur Ermittlung der jeweiligen Läuferposition umfassen. Dies bietet den Vorteil, dass die aktuellen Positionen eines jeden der Läufer erfasst werden und so einerseits mittels der Linearmotor-Fördereinrichtung eine exakte Positionierung jedes einzelnen der Läufer zu jeder Zeit gewährleistet ist und andererseits über die jeweiligen Läuferpositionen die aktuellen Positionen und Geschwindigkeiten jedes einzelnen der Geflügelschlachtkörper erfasst werden.

Eine vorteilhafte Ausbildung der Erfindung ist dadurch gekennzeichnet, dass die Steuereinrichtung eingerichtet ist, den Linearantrieb derart anzusteuern, dass jeweils der Abstand zwischen den Halteelementen der Läufer eines der Läuferpaare zumindest im Wesentlichen einem vorgegebenen Läuferpaarabstand entspricht.

Unter dem Läuferpaarabstand wird also der Abstand zwischen den Halteelementen der beiden benachbarten Läufer verstanden, entspricht also zugleich dem Abstand der in die jeweiligen Halteelemente eingehängten Geflügelbeinen.

Vorteilhafterweise ist beispielsweise einer der ein Läuferpaar bildenden Läufer als "Master" ausgebildet, dessen aktuelle Geschwindigkeit und Position seitens der Steuereinrichtung bedarfsgemäß vorgegeben wird. Der jeweils andere Läufer dieses Läuferpaares ist als "Slave" eingerichtet und folgt dem erstgenannten Läufer durch die Steuereinrichtung veranlasst derart, dass der Abstand zwischen den jeweiligen Halteelementen der Läufer konstant oder im Wesentlichen konstant ist.

Vorteilhafterweise ist die Steuereinrichtung daher eingerichtet, die Position und/oder die Geschwindigkeit mindestens eines der Läufer jeweils eines der Läuferpaare auf Basis einer Positionssollvorgabe und/oder einer Geschwindigkeitssollvorgabe zu steuern. Weiter bevorzugt ist die Steuereinrichtung eingerichtet, die Position und/oder die Geschwindigkeit des jeweils anderen Läufers jeweils eines der Läuferpaare unter Einhaltung des jeweiligen Läuferpaarabstandes nachzuführen.

Gemäß einer weiteren bevorzugten Ausbildung der Erfindung umfasst die Rundläufereinrichtung ein Antriebsaggregat und ist zumindest im Wesentlichen mit konstanter Umlaufgeschwindigkeit angetrieben. Vorteilhafterweise umfasst die Rundläufereinrichtung Sensormittel, die zum Erfassen der Winkelposition des Rundläufers, zum Erfassen der Ist-Umlaufgeschwindigkeit und zur Bestimmung der jeweiligen aktuellen Positionen mindestens einer der Hängeaufnahmen eingerichtet sind. Die Rundläufereinrichtung ist ferner ausgebildet, die so erfassten Größen an die Steuereinrichtung zu übermitteln. Auf diese Weise können beispielsweise lastabhängige Schwankungen der Umlaufgeschwindigkeit der Rundläufereinrichtung erfasst und jederzeit deren aktuelle Winkelposition ermittelt werden, die als Ausgangsbasis zur Synchronisation der Übergabe der Geflügelschlachtkörper von der Rundläufereinrichtung an die Linearmotor-Fördereinrichtung dient.

Gemäß einer weiteren bevorzugten Ausführungsform ist die Steuereinrichtung ausgebildet, die Position und/oder die Geschwindigkeit der Läufer eines Läuferpaares basierend auf der erfassten Ist-Umlaufgeschwindigkeit und der ermittelten aktuellen Position der mindestens einen Hängeaufnahme derart zu steuern, dass jeweils einer der Läufer zur Einzelbeinübergabe mit der jeweiligen Hängeaufnahme der Rundläufereinrichtung zeitgleich in dem Überführungsbereich aufeinandertreffen. Anders ausgedrückt ist die Steuereinrichtung ausgebildet, ein koordiniertes Aufeinandertreffen eines der Läufer mit dem von der Rundläufereinrichtung zu übergebenden Bein zu synchronisieren. Die Steuereinrichtung ist beispielsweise eingerichtet, aus den genannten Ausgangsgrößen vorauszuberechnen, welche Geschwindigkeit bzw. welches Geschwindigkeitsprofil des Läufers erforderlich ist, um in dem Überführungsbereich exakt mit dem zu übergebenden Bein des Geflügelschlachtkörpers zusammenzutreffen.

Gemäß einer weiteren bevorzugten Ausbildung der Erfindung ist die Rundläufereinrichtung zum Überführen der Geflügelkörper an die Linearmotor-Fördereinrichtung eingerichtet und die Anordnung umfasst weiter eine zweite Rundläufereinrichtung, die zum Überführen der Geflügelkörper von der Linearmotor-Fördereinrichtung an die zweite Rundläufereinrichtung ausgebildet ist. Dies bietet den Vorteil, dass die Geflügelschlachtkörper von der Rundläufereinrichtung an die Linearmotor-Fördereinrichtung steuervariabel überführt werden. Die mittels der Linearmotor-Fördereinrichtung geförderten Geflügelschlachtkörper sind vom Takt der Rundläufereinrichtung nun entkoppelt und können, beispielsweise zu stationär auszuführenden Bearbeitungszwecken, angehalten werden. Anschließend werden diese mittels der Linearmotor-Fördereinrichtung weitergefördert und an die zweite Rundläufereinrichtung übergeben. Beide der Rundläufereinrichtungen sind vorzugsweise derart ausgebildet, dass diese mit einer Hauptförderlinie synchronisiert arbeiten. Während die Rundläufereinrichtung eingerichtet ist, die Geflügelschlachtkörper zunächst von der Hauptförderline abzunehmen und an die Linearmotor-Fördereinrichtung zu übergeben, ist die zweite Rundläufereinrichtung ausgebildet, die Geflügelschlachtkörper im Anschluss von der Linearmotor-Fördereinrichtung zu übernehmen und diese schließlich an die Hauptförderlinie zurückzuführen.

Des Weiteren wird die Aufgabe durch ein entsprechendes Verfahren mit den eingangs genannten Merkmalen dadurch gelöst, dass das Verfahren die Schritte Fördern des Schlachtgeflügels mittels einer einen Linearantrieb umfassenden Linearmotor-Fördereinrichtung entlang einer durch eine Führungsschiene gebildeten umlaufenden Förderstrecke durch gesteuertes Bewegen einer Mehrzahl entlang der Führungsschiene mittels des Linearantriebs jeweils separat steuerbewegbar angeordneten Läufern, wobei jeweils ein Geflügelbein mittels jeweils an jedem der Läufer angeordneten Halteelementen gehalten wird; Steuern des Linearantriebs mittels einer Steuereinrichtung derart, dass jeweils einer der Geflügelkörper durch paarweises Bewegen eines Läuferpaares steuervariabel gefördert wird, wobei das Läuferpaar jeweils zwei benachbarte der Läufer umfasst, umfasst. Mittels jeweils zwei der separat steuerbaren und auf der Förderschiene benachbarten Läufer wird so vorteilhafterweise ein Läuferpaar gebildet mittels dessen jeweils einer der Geflügelschlachtkörper gefördert wird. Es erfolgt also eine steuerseitige Kopplung jeweils benachbarter Läufer, so dass die Bewegung der Läufer voneinander abhängig bzw. gebunden ist. Durch diese Kopplung jeweils zweier der Läufer wird eine zuverlässige Förderung der Geflügelschlachtkörper gewährleistet. Beide Beine des Geflügelschlachtkörpers werden sicher durch jeweils einen Läufer mit einem der Halteelemente gehalten. Durch die zwangsgekoppelte Bewegung der beiden Läufer wird eine Art starrer Doppelhängeaufnahme für den zu fördernden Geflügelschlachtkörper gebildet. Der Abstand der Halteelemente einer solchen Doppelhängeaufnahme ist jedoch steuervariabel eingerichtet, so dass der Abstand zu verschiedenen Zwecken in gewissem Maß variierbar ist.

Eine bevorzugte Weiterbildung der Erfindung zeichnet sich durch Ermitteln der jeweiligen Läuferposition mittels Positionsverfolgungsmitteln aus.

Gemäß einer weiteren bevorzugten Ausbildung der Erfindung wird der Linearantrieb mittels der Steuereinrichtung derart gesteuert, dass jeweils der Abstand zwischen den Halteelementen der Läufern eines der Läuferpaare zumindest im Wesentlichen einem vorgegebenen Läuferpaarabstand entspricht.

Eine weitere zweckmäßige Ausbildung der Erfindung ist gekennzeichnet durch Steuern der Position und/oder der Geschwindigkeit mindestens eines der Läufer jeweils eines der Läuferpaare auf Basis einer Positionssollvorgabe und/oder einer Geschwindigkeitssollvorgabe.

Gemäß einer weiteren bevorzugten Ausführungsform wird die Position und/oder die Geschwindigkeit des jeweils anderen Läufers jeweils eines der Läuferpaare unter Einhaltung des jeweiligen Läuferpaarabstandes mittels der Steuereinrichtung nachgeführt.

Die mit dem vorstehend genannten erfindungsgemäßen Verfahren verbunden Vorteile und Vorzüge sind bereits zuvor im Zusammenhang mit der erfindungsgemäßen Anordnung in aller Ausführlichkeit beschrieben, so dass an dieser Stelle zur Vermeidung von Wiederholungen auf die dort genannten Vorzüge verwiesen wird. Diese gelten in analoger Weise auch für das erfindungsgemäße Verfahren.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert.

In der Zeichnung zeigt:
- Fig. 1: eine perspektivische Übersichtsansicht der erfindungsgemäßen Anordnung
- Fig. 2: eine perspektivische Detailansicht der erfindungsgemäßen Anordnung,
- Fig. 3 - 8: jeweils perspektivische Ansichten in unterschiedlichen Stadien der Übergabe eines Geflügelkörpers,
- Fig. 9 und 10: Draufsichten einer Auswahl der in den Figuren 3 bis 8 gezeigten Übergabestadien und

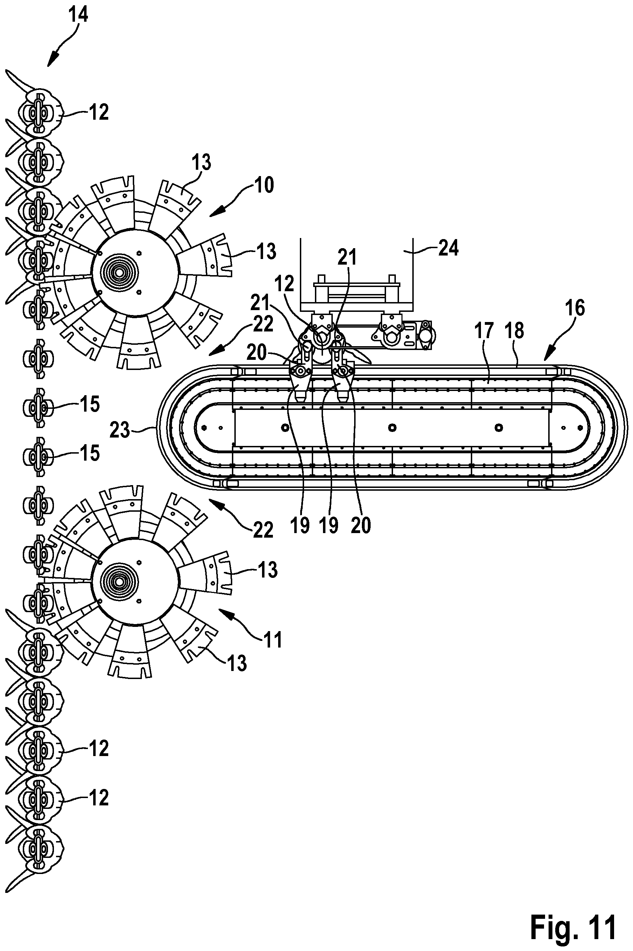

- Fig. 11: eine Draufsicht der in Figur 1 gezeigten Ansicht.

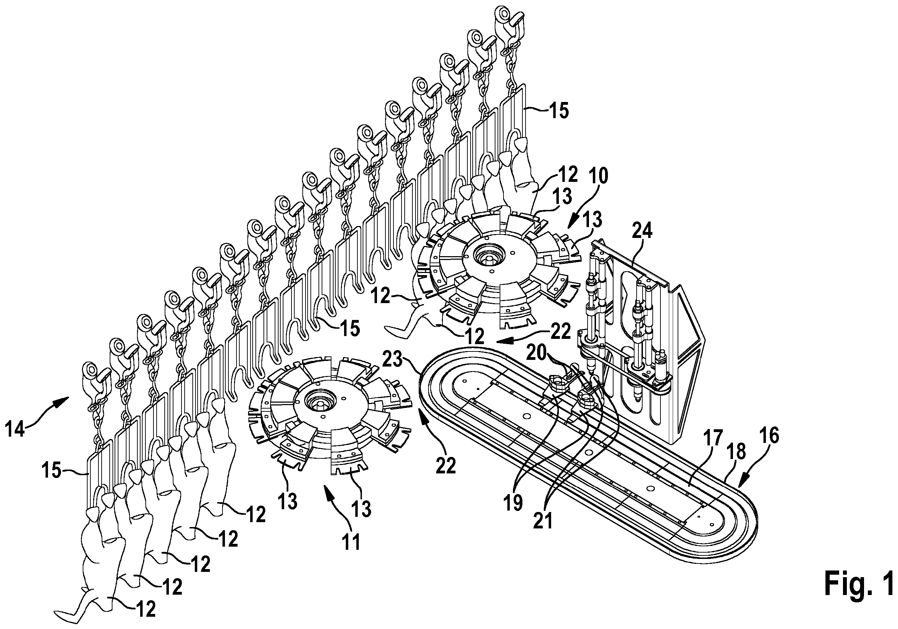

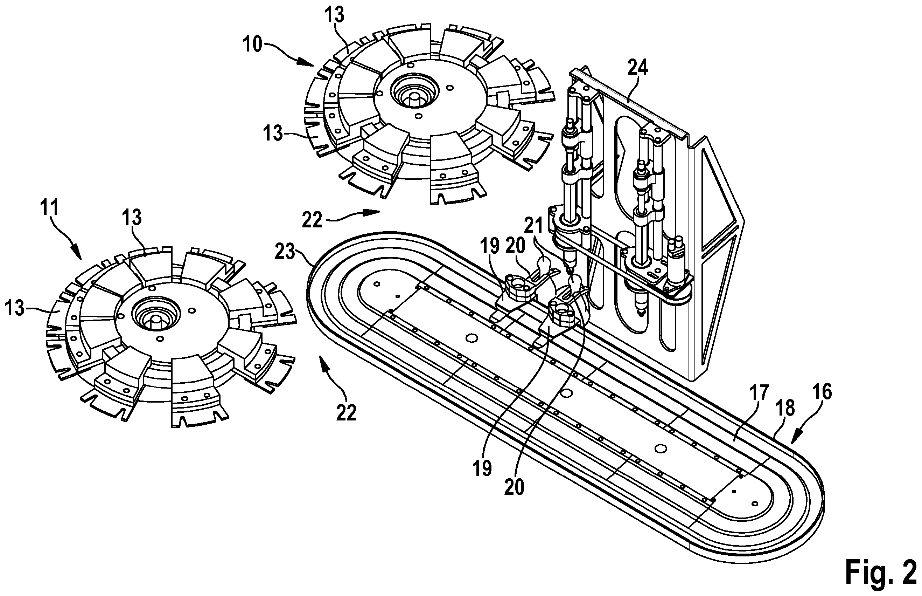

Figur 1 zeigt eine perspektivische Übersichtsansicht der erfindungsgemäßen Anordnung. Teil dieser Anordnung ist die erfindungsgemäße Vorrichtung, die ebenfalls in Figur 1 dargestellt ist. Figur 2 zeigt eine perspektivische Detailansicht der erfindungsgemäßen Anordnung sowie der erfindungsgemäßen Vorrichtung. Zur Vermeidung von Wiederholungen werden im Folgenden die erfindungsgemäße Anordnung sowie die erfindungsgemäße Vorrichtung jeweils im Kontext mit dem zugehörigen erfindungsgemäßen Verfahren im Detail erläutert.

Die Figuren 1 und 2 zeigen beispielhaft die erfindungsgemäße Anordnung zur Übergabe von Schlachtgeflügel. Die Anordnung umfasst mindestens eine Rundläufereinrichtung 10, 11, die zur Hängeförderung von Schlachtgeflügel entlang einer gekrümmten Förderstrecke eingerichtet ist. Die gekrümmte Förderstrecke ist durch den Aufbau der Rundläufereinrichtung definiert. Die gekrümmte Förderstrecke kann beispielsweise kreisförmig ausgebildet sein. In diesem Fall ist die mindestens eine Rundläufereinrichtung 10, 11 radförmig ausgebildet und rotiert um eine Drehachse, die durch den Radmittelpunkt verläuft. Alternativ ist es möglich, dass die Drehachse bezüglich der Radmitte exzentrisch angeordnet ist. Vorzugsweise ist die mindestens eine Rundläufereinrichtung 10, 11 - wie in der Zeichnung gezeigt - radförmig mit exzentrisch angeordneter Drehachse ausgebildet und umfasst eine Verstellmechanik, mittels derer sich der Abstand zwischen den Hängeaufnahmen 13 beim Umlauf hin zur Linearmotor-Fördereinrichtung 16 vergrößert, während sich der Abstand zwischen den Hängeaufnahmen 13 beim Umlauf hin zur Hauptförderlinie 14 entsprechend verringert. Der erweiterte Abstand zwischen den Hängeaufnahmen 13 in dem Überführungsbereich 22 wirkt sich vorteilhaft auf das zum Überführen der Geflügelkörper 12 zur Verfügung stehende Zeitfenster aus, so dass stets eine einwandfreie Übergabe gewährleistet wird.

Die mindestens eine Rundläufereinrichtung 10, 11 weist eine Mehrzahl von jeweils zum beidbeinigen Halten eines Geflügelkörpers 12 eingerichteten Hängeaufnahmen 13 auf.

Vorzugsweise - aber nicht notwendigerweise - umfasst die Anordnung eine Hauptförderlinie 14, mittels der die Geflügelkörper 12 in Doppelschäkel 15 eingehängt gefördert werden. Die Hauptförderlinie 14 sowie die mindestens eine Rundläufereinrichtung 10, 11 arbeiten weiter bevorzugt synchronisiert, d. h. die Fördergeschwindigkeiten sind derart aufeinander abgestimmt, dass eine Übergabe der Geflügelkörper 12 von der Hauptförderlinie auf die mindestens eine Rundläufereinrichtung 10, 11 und umgekehrt ermöglicht wird.

Wie in der Zeichnung gezeigt sind vorzugsweise zwei der Rundläufereinrichtungen, nämlich die Rundläufereinrichtung 10 sowie die zweite Rundläufereinrichtung 11 vorgesehen. Aus Gründen der besseren Darstellbarkeit wird im Folgenden zunächst nur eine der Rundläufereinrichtungen 10, 11 beschrieben. Sämtliche Ausführungen hierzu gelten jedoch für jede der Rundläufereinrichtungen 10, 11 in gleicher Weise.

Die erfindungsgemäße Anordnung umfasst weiter eine Linearmotor-Fördereinrichtung 16, die einen Linearantrieb aufweist. Die Linearmotor-Fördereinrichtung 16 bildet eine umlaufende Förderstrecke 17 mit einer Mehrzahl entlang einer Führungsschiene 18 mittels des Linearantriebs jeweils separat steuerbewegbar angeordneten Läufern 19, von denen aus Übersichtlichkeitsgründen in der Zeichnung jeweils nur zwei dargestellt sind. Bei einer solchen Linearmotor-Fördereinrichtung 16 handelt es sich beispielsweise um das lineare Transportsystem XTS der Firma Beckhoff. In der Führungsschiene 18 einer solche Linearmotor-Fördereinrichtung 16 sind eine Vielzahl von einzeln ansteuerbaren Elektromagneten angeordnet, während die Läufer 19 mittels Kugel- oder Rollenlagerung entlang der Führungsschiene 18 verschieblich gelagert sind. Der Linearantrieb wird durch die steuerbaren Elektromagnete der Führungsschiene 18 sowie in den Läufern 19 integrierte Magnete realisiert, so dass jeder der Läufer 19 individuell und einzeln ansteuerbar und damit separat bewegbar eingerichtet ist.

An jedem der Läufer 19 ist jeweils ein Halteelement 20 angeordnet, das zur Aufnahme jeweils eines Geflügelbeins 21 ausgebildet und eingerichtet ist.

Die Rundläufereinrichtung 10 und die Linearmotor-Fördereinrichtung 16 sind derart angeordnet, dass die gekrümmte Förderstrecke in einem Überführungsbereich 22 mit einem Kurvenabschnitt 23 der umlaufenden Förderstrecke 17 zumindest teilweise überlappt. Hierdurch wird die Übergabe des Schlachtgeflügels bzw. der Geflügelkörper 12 zwischen den Förderlinien, also der mindestens einen Rundläufereinrichtung 10, 11 und der Linearmotor-Fördereinrichtung 16 ermöglicht. Wie der Zeichnung zu entnehmen ist, sind die jeweils offenen Seiten einerseits der Hängeaufnahmen 13 der mindestens einen Rundläufereinrichtung 10, 11 und die Halteelemente 20 zur Aufnahme jeweils eines der Geflügelbeine 21 in dem Überführungsbereich 22 jeweils einander zugewandt, so dass das jeweilige Geflügelbein 21 von der Hängeaufnahme 13 an das jeweilige Halteelement 20 und umgekehrt übergebbar ist. Unter teilweiser Überlappung von der gekrümmten Förderstrecke und dem Kurvenabschnitt 23 der umlaufenden Förderstrecke 17 wird verstanden, dass die jeweiligen Bahnabschnitte derart angeordnet sind, dass diese sich in mindestens einem Punkt überschneiden oder einen minimalen Abstand zueinander aufweisen, der eine zuverlässige Einzelbeinüberführung erlaubt.

Die Linearmotor-Fördereinrichtung 16 weist eine - in der Zeichnung nicht gezeigte - Steuereinrichtung auf, die zum steuervariablen Fördern jeweils eines der Geflügelkörper 12 durch paarweises Bewegen eines der Läuferpaare ausgebildet ist. Ein Läuferpaar umfasst jeweils zwei benachbarte Läufer 19, also jeweils zwei der Läufer 19 die auf der Führungsschiene 18 nebeneinander angeordnet sind. Die Steuereinrichtung ist also ausgebildet, die beiden Läufer 19 eines Läuferpaares quasi synchron zu bewegen. Die so gemeinsam bewegten Läufer 19 bilden auf diese Weise eine Art "virtuelle" Geflügelkörperaufnahme, deren Halteelemente 20 für die beiden Geflügelbeine 21 je eines der Geflügelkörper 12 einen konstanten oder zumindest im Wesentlichen konstanten Abstand aufweisen. Der Abstand der Läufer 19 eines Läuferpaares ist jedoch - wie weiter unten im Detail erläutert wird - optional mittels der Steuereinrichtung variierbar eingerichtet.

In den Figuren 1 und 2 ist nur schematisch eine Bearbeitungsstation 24 angedeutet. Die Bearbeitungsstation 24 ist zur stationären Bearbeitung der Geflügelkörper 12 ausgebildet und eingerichtet. Die Bearbeitungsstation 24 ist beispielsweise zum Entweiden oder zum Herstellen eines Zugangs zur Bauchhöhle des Geflügelkörpers 12 über die Kloakenöffnung ausgebildet. Grundsätzlich kann die Bearbeitungsstation 24 ausgebildet sein, jeden üblichen Bearbeitungsvorgang auszuführen, der bei der Verarbeitung von Schlachtgeflügel erforderlich ist. Hierzu können wahlweise entlang der umlaufenden Förderstrecke 17 mehrere der Bearbeitungsstationen 24 mit unterschiedlicher Funktion angeordnet sein.

Die Steuereinrichtung ist weiter eingerichtet, durch paarweises Bewegen der ein Läuferpaar bildenden Läufer 19 die Geflügelkörper 12 bedarfsgemäß in verschiedene Bearbeitungspositionen zu verbringen, so dass eine optimale Bearbeitung mittels der Bearbeitungsstation 24 ermöglicht wird.

Vorzugsweise umfassen die Läufer 19 jeweils - in der Zeichnung nicht gezeigte - Positionsverfolgungsmittel, die zur Ermittlung der jeweiligen Läuferposition eingerichtet sind. Auch ist es möglich, dass die Steuereinrichtung der Linearmotor-Fördereinrichtung 16 Mittel zur Positionsverfolgung jedes einzelnen der Läufer 19 umfasst. Auf diese Weise ist die jeweilige Position eines jeden Läufers 19 nachverfolgbar eingerichtet. Die Positionsverfolgung kann beispielsweise durch Anlernen der Läufer 19 an einer vordefinierten Nullposition erfolgen. Wird die Position des Läufers 19 anschließend durch die Steuereinrichtung verändert, wird die geänderte aktuelle Position in der Steuereinrichtung kontinuierlich gespeichert.

Die Läufer 19 sind alternativ mit einer Kennung versehen, die seitens der Steuereinrichtung ausgelesen und zur Positionsbestimmung herangezogen wird. Weiter bevorzugt sind die Positionsverfolgungsmittel integrierter Bestandteil der Steuereinrichtung der Linearmotor-Fördereinrichtung 16. Dies bietet den Vorteil, dass die jeweils gewünschten Positionen der Läufer 19 bzw. das gewünschte Bewegungsprofil mittels der Steuereinrichtung vorgebbar ist und die Steuereinrichtung die exakte Positionierung der Läufer 19 übernimmt.

Vorteilhafterweise ist die Steuereinrichtung weiter eingerichtet, den Linearantrieb derart anzusteuern, dass jeweils der Abstand zwischen den Läufern 19 eines der Läuferpaare zumindest im Wesentlichen einem vorgegebenen Läuferpaarabstand entspricht. Auf diese Weise wird der Abstand zwischen den genannten Läufern 19 im Wesentlichen konstant gehalten, um die Geflügelkörper 12 an den Geflügelbeinen 21 hängend zuverlässig steuervariabel zu fördern.

Die Steuereinrichtung ist zudem eingerichtet, die Position und/oder die Geschwindigkeit mindestens eines der Läufer 19 jeweils eines der Läuferpaare auf Basis einer Positionssollvorgabe und/oder einer Geschwindigkeitssollvorgabe zu steuern. Durch derartige Positionssollvorgaben und/oder Geschwindigkeitssollvorgaben ist einerseits ein kontrolliertes Überführen der Geflügelkörper 12 zwischen einer der Rundläufereinrichtung 10, 11 und der Linearmotor-Fördereinrichtung 16 und anderseits ein temporäres Anhalten zur stationären Bearbeitung der Geflügelkörper mittels der Bearbeitungsstation 24 möglich.

Bevorzugt ist die Steuereinrichtung weiter eingerichtet, die Position und/oder die Geschwindigkeit des jeweils anderen Läufers 19 jeweils eines der Läuferpaare unter Einhaltung des jeweiligen Läuferpaarabstandes nachzuführen. Anders ausgedrückt ist die Steuereinrichtung ausgebildet auf Basis der Positionssollvorgabe und/oder der Geschwindigkeitssollvorgabe die jeweilige Position eines der Läufer 19 vorzugeben. Der jeweils andere Läufer 19 des Läuferpaares wird mittels der Steuereinrichtung unter Einhaltung des vorgegebenen Läuferpaarabstandes nachgeführt, folgt also dem ersten der Läufer 19 in einem vordefinierten Abstand. Die Steuereinrichtung ist folglich eingerichtet, Position und/oder Geschwindigkeit des ersten Läufers des Läuferpaares als "Master" einzustellen, während der jeweils andere der Läufer 19 im "Slave-Betrieb" zu diesem in konstantem oder im Wesentlichen in konstantem Abstand hinter dem ersten der Läufer 19 nachgeführt wird.

Vorzugsweise umfasst die Rundläufereinrichtung 10 ein - in der Zeichnung nicht gezeigtes - Antriebsaggregat, mittels dessen diese mit zumindest im Wesentlichen konstanter Umlaufgeschwindigkeit angetrieben wird. Die Umlaufgeschwindigkeit der Rundläufereinrichtung ist bevorzugt auf die Fördergeschwindigkeit der Hauptförderlinie 14 abgestimmt. Weiter bevorzugt ist der Antrieb der Hauptförderlinie mit dem der Rundläufereinrichtungen 10, 11 mechanisch gekoppelt, so dass diese zwangssynchronisiert eingerichtet sind. Gemäß einer alternativen Ausführung sind die Rundläufereinrichtungen 10, 11 sowie die Hauptförderlinie jeweils mit eigenen Antriebsaggregaten mit jeweils aufeinander abgestimmten Antriebsgeschwindigkeiten ausgestattet.

Die Rundläufereinrichtung 10 und/oder die Rundläufereinrichtung 11 ist/sind zum Erfassen der Winkelposition des jeweiligen Rundläufers 10, 11 eingerichtet und umfassen hierzu eingerichtete Sensormittel. Die Sensormittel sind weiter zum Erfassen der Ist-Umlaufgeschwindigkeit und zur Bestimmung der jeweiligen aktuellen Positionen mindestens einer der Hängeaufnahmen 13 eingerichtet. Zudem ist die Steuereinrichtung ausgebildet, die Position und/oder die Geschwindigkeit der Läufer eines Läuferpaares basierend auf der erfassten Ist-Umlaufgeschwindigkeit und der ermittelten aktuellen Position der mindestens einen Hängeaufnahme derart zu steuern, dass jeweils einer der Läufer zur Einzelbeinübergabe mit der jeweiligen Hängeaufnahme der Rundläufereinrichtung zeitgleich in dem Überführungsbereich 22 aufeinandertreffen.

Mit anderen Worten ist die Steuereinrichtung ausgebildet, die Läufer 19 in dem Überführungsbereich 22 mit dem Umlauf der jeweiligen Rundläufereinrichtung 10, 11 zu synchronisieren, während in den übrigen Förderabschnitten der umlaufenden Förderstrecke 17 der Linearmotor-Fördereinrichtung 16 die Bewegung der Läufer 19 unabhängig von der Umlaufgeschwindigkeit der Rundläufereinrichtungen 10, 11 ist.

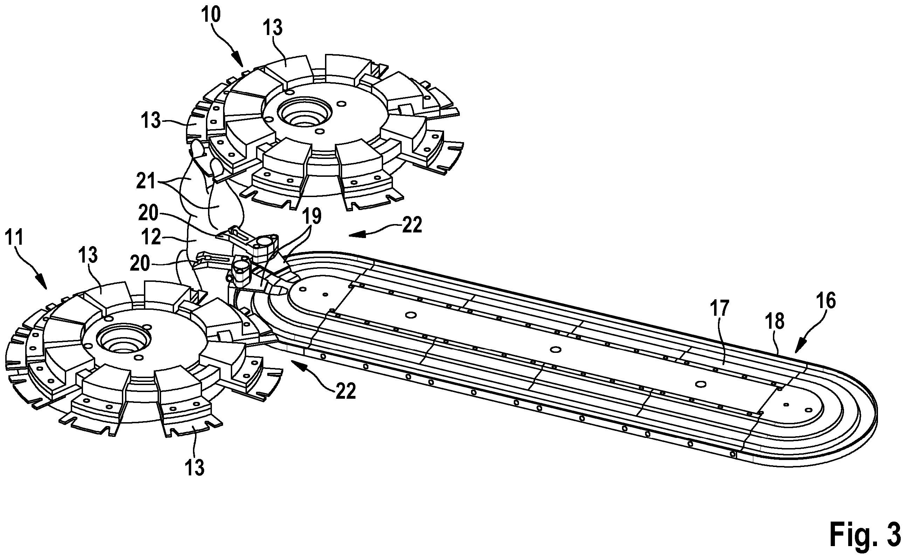

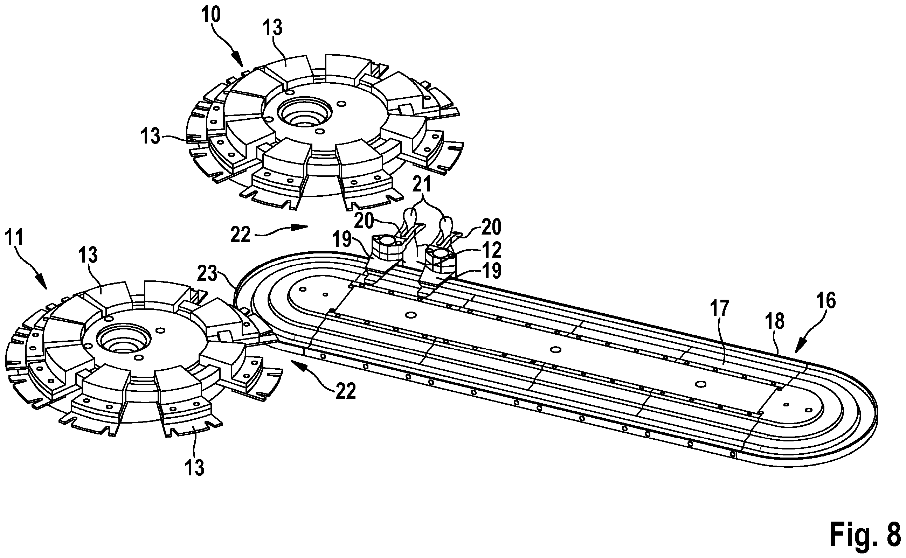

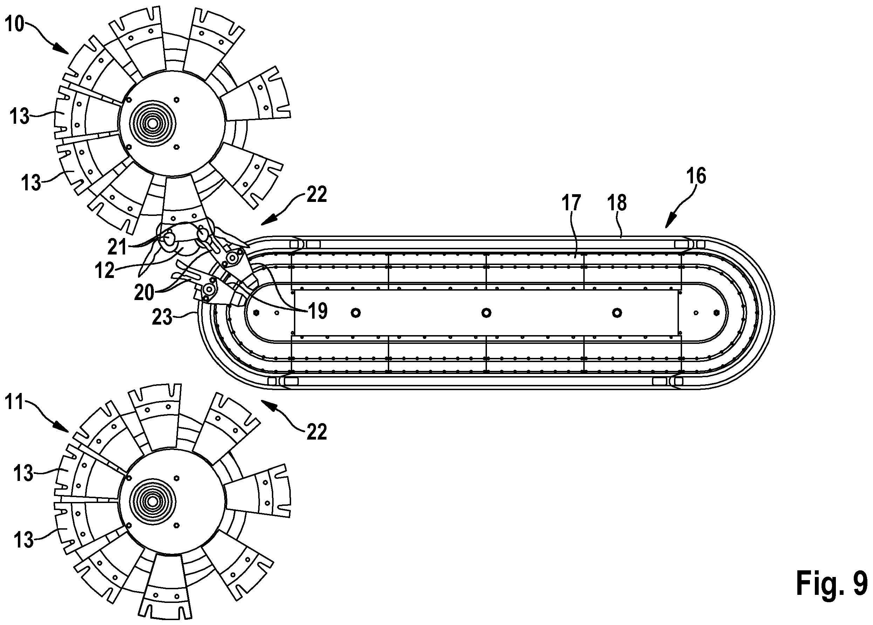

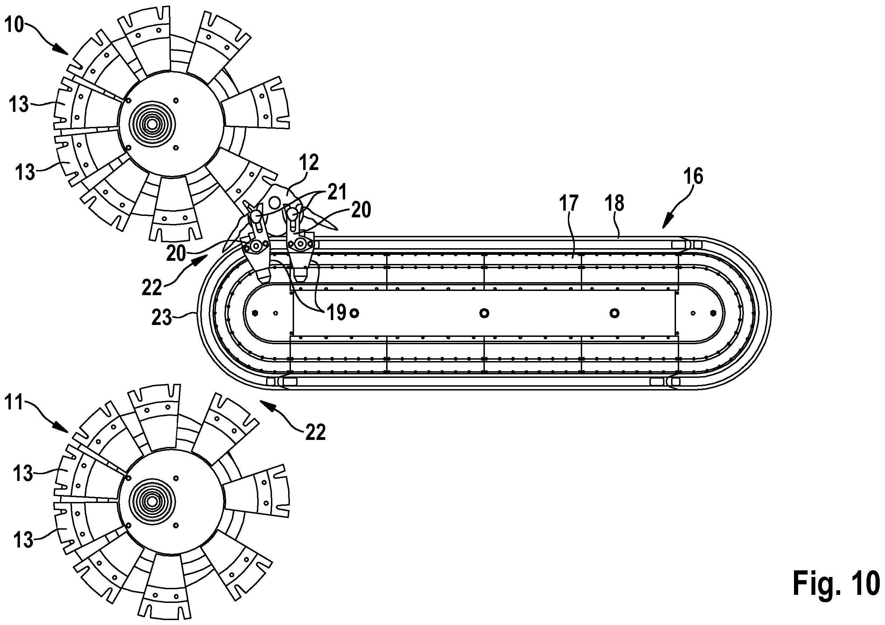

Dies soll anhand der Figuren 3 bis 8, die jeweils perspektivische Ansichten in unterschiedlichen Stadien der Übergabe eines Geflügelkörpers zeigen, sowie den entsprechenden in Figur 9 und 10 gezeigten Draufsichten im Folgenden näher erläutert werden. Der Vorgang wird beispielhaft bei der Überführung eines Geflügelkörpers 12 von der Rundläufereinrichtung 10 an die Linearmotor-Fördereinrichtung 16 beschrieben, gilt jedoch in analoger Weise auch für die Überführung eines Geflügelkörpers 12 von der Linearmotor-Fördereinrichtung 16 an die zweite Rundläufereinrichtung 11.

Figur 3 zeigt die Positionen der Läufer 19 eines Läuferpaares vor Beginn der Überführung des Geflügelkörpers 12 von der Rundläufereinrichtung 10 an die Linearmotor-Fördereinrichtung 16. Über das - nicht gezeigte - Sensormittel liegen der Steuereinrichtung Informationen darüber vor, in welcher aktuellen (Winkel-)Position sich die erste Rundläufereinrichtung 10 befindet. Die Steuereinrichtung steuert nun die sich im Uhrzeigersinn bewegende Läufer 19 der Linearmotor-Fördereinrichtung 16 derart an, dass diese spätestens beim Eintreten in den Überführungsbereich 22 eine Fördergeschwindigkeit aufweisen, die der Bahngeschwindigkeit des zu übergebenden Geflügelbeines 21 entsprechen. Die Steuereinrichtung ist weiter eingerichtet, den voraussichtlichen Zeitpunkt des Zusammentreffens des Läufers 19 mit dem ersten der Geflügelbeine 21 vorab zu ermitteln und das hierzu erforderliche Beschleunigungsprofil zu bestimmen, mit dem der vorauseilende der Läufer 19 des Läuferpaares zu beschleunigen ist.

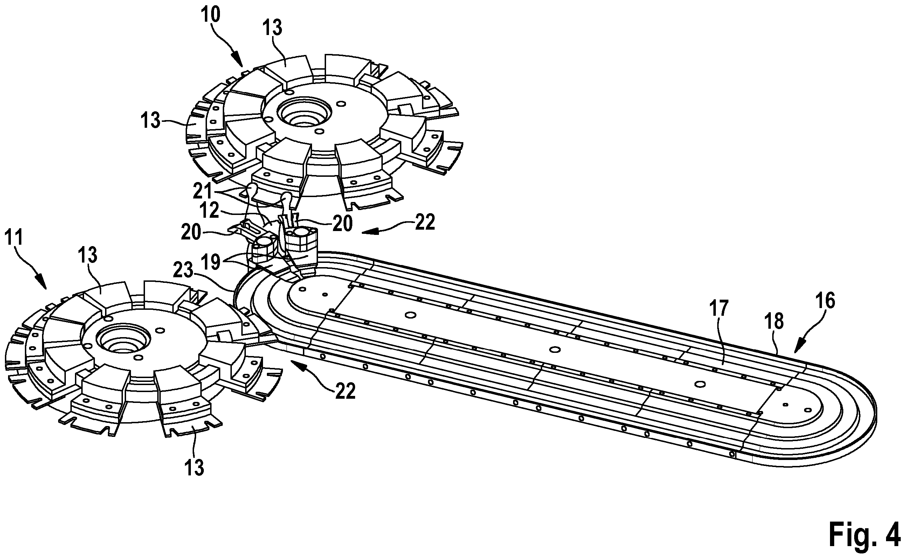

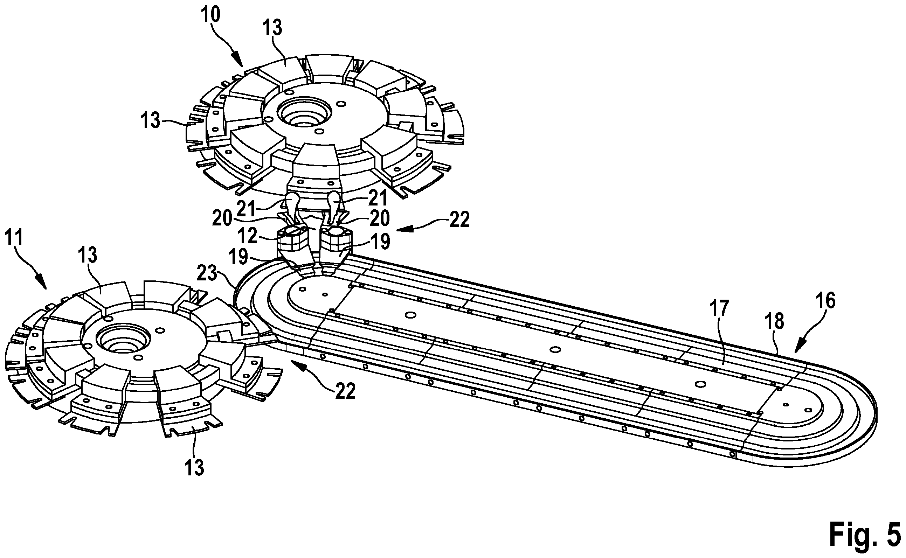

Hierdurch trifft der vorauseilende der Läufer 19 des Läuferpaares - wie in Figuren 4 und 5 gezeigt - exakt mit dem Halteelement 20 des ersten der Geflügelbeine 21 in dem Überführungsbereich 22 zusammen, so dass das erste der Geflügelbeine 21 aus der Hängeaufnahme 13 der Rundläufereinrichtung 11 in das Halteelement 20 des vorauseilenden Läufers 19 überführt wird.

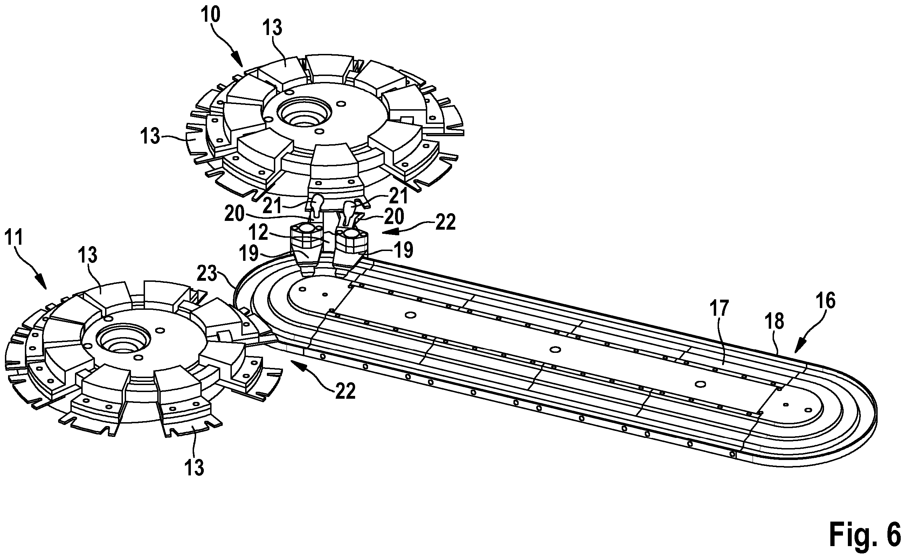

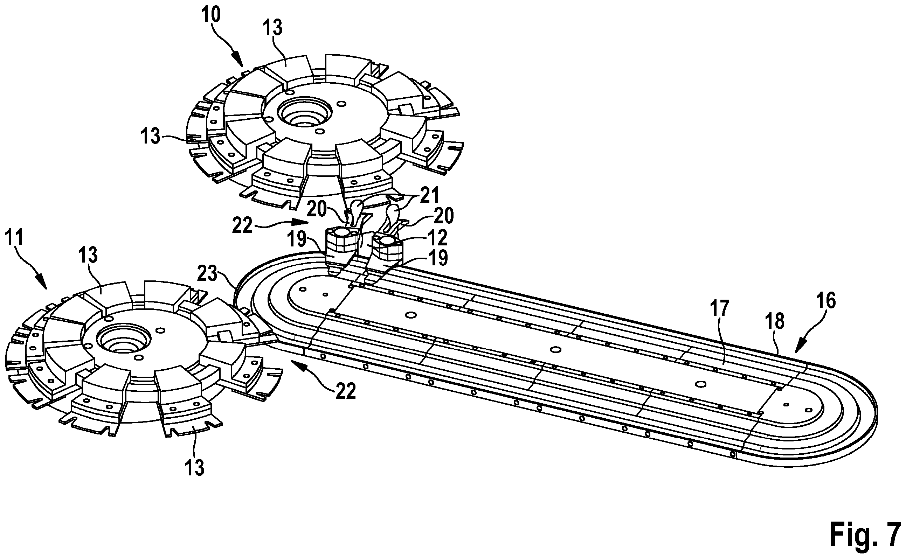

Figur 6 zeigt, wie der vorauseilende der Läufer 19 bereits das erste der Geflügelbeine 21 übernommen hat, während nun das zweite der Geflügelbeine 21 von der Hängeaufnahme 13 der Rundläufereinrichtung 11 an das Halteelement 20 des nacheilenden Läufers 19 überführt wird. In den Figuren 6 und 7 wird gezeigt, wie die Geflügelbeine 21 die Hängeaufnahmen 13 endgültig verlassen und nun mittels der Läufer 19 in deren Halteelemente 20 eingehängt mittels der Linearmotor-Fördereinrichtung 16 weiter gefördert werden.

Ab dem Zeitpunkt des Verlassens des Überführungsbereichs 22 endet die zuvor beschriebenen Zwangssynchronisation zwischen den Läufern 19 und der Rundläufereinrichtung 10. D. h. die Steuereinrichtung ist eingerichtet, die Läufer 19 bedarfsgemäß entlang der umlaufenden Förderstrecke 17 mit beliebigen Geschwindigkeiten losgelöst von der Umlaufgeschwindigkeit der Rundläufereinrichtungen 10, 11 zu fördern. So können die Geflügelkörper 12 zu Bearbeitungszwecken an der Bearbeitungsstation 24 beispielsweise für unterschiedlich lange Zeiten angehalten werden, ohne dass dies Einfluss auf die Fördergeschwindigkeit der Hauptförderlinie 14 hat. Dies eröffnet die Möglichkeit einer hoch qualitativen Bearbeitung der Geflügelkörper 12. Aufgrund der Entkopplung von einem andernfalls durch die Fördergeschwindigkeit der Hauptförderlinie 14 vorgegebenen zeitlichen Bearbeitungsfenster innerhalb dessen die Bearbeitungsschritte auszuführen wären, bietet die vorliegende Erfindung den Vorteil, dass die Bearbeitung individualisiert und für jeden einzelnen der Geflügelkörper 12 in optimaler Weise durchführbar ist. Die Figuren 9 und 10 zeigen ergänzend jeweils Draufsichten der in den Figuren 4 und 7 gezeigten Übergabestadien.

Wie in der Zeichnung gezeigt ist die Rundläufereinrichtung 10 zum Überführen der Geflügelkörper 12 an die Linearmotor-Fördereinrichtung 16 eingerichtet. Eine zweite Rundläufereinrichtung 11 ist zum Überführen der Geflügelkörper 12 von der Linearmotor-Fördereinrichtung 16 an die zweite Rundläufereinrichtung 11 ausgebildet. Mit anderen Worten ist die Rundläufereinrichtung 10 zum Abnehmen der Geflügelkörper 12 von der Hauptförderlinie 14 sowie zur anschließenden Überführung derselben an die Linearmotor-Fördereinrichtung 16 ausgebildet. Die zweite Rundläufereinrichtung 11 ist eingerichtet, die Geflügelkörper 12 von der Linearmotor-Fördereinrichtung zu übernehmen und diese anschließend an die Hauptförderlinie 14 oder an weitere - in der Zeichnung nicht gezeigte - Förderlinien zurückzuführen.

Das erfindungsgemäße Verfahren umfasst das Fördern des Schlachtgeflügels bzw. der Geflügelkörper mittels der den Linearantrieb umfassenden Linearmotor-Fördereinrichtung 16 entlang der umlaufenden Förderstrecke 17, die durch die Führungsschiene 18 gebildet wird. Die Geflügelkörper 12 werden durch gesteuertes Bewegen einer Mehrzahl entlang der Führungsschiene 18 mittels des Linearantriebs jeweils separat steuerbewegbar angeordneten Läufern 19 gefördert. Die Geflügelbeine 21 werden mittels jeweils an den Läufern 19 angeordneten Halteelementen 20 gehalten.

Der Linearantrieb wird mittels der Steuereinrichtung derart gesteuert, dass jeweils einer der Geflügelkörper 12 durch paarweises Bewegen eines Läuferpaares gefördert wird. Die Läuferposition wird mittels Positionsverfolgungsmitteln ermittelt und an die Steuereinrichtung zur Weiterverarbeitung geleitet. Der Abstand zwischen den Läufern 19 eines der Läuferpaare wird auf diese Weise so gesteuert, dass dieser zumindest im Wesentlichen dem vorgegebenen Läuferpaarabstand entspricht. Vorzugsweise wird/ werden Position und/oder Geschwindigkeit mindestens eines der Läufer 19 jeweils eines der Läuferpaare auf Basis einer Positionssollvorgabe und/oder einer Geschwindigkeitssollvorgabe gesteuert. Weiter bevorzugt wird/werden Position und/oder Geschwindigkeit des jeweils anderen Läufers 19 jeweils eines der Läuferpaare unter Einhaltung des jeweiligen Läuferpaarabstandes mittels der Steuereinrichtung nachgeführt.

## Patentansprüche

1. Anordnung zur Übergabe von Schlachtgeflügel zwischen Förderlinien in einer Geflügelbearbeitungsanlage, umfassend
mindestens eine Rundläufereinrichtung (10, 11) zur Hängeförderung von Schlachtgeflügel entlang einer gekrümmten Förderstrecke mit einer Mehrzahl von jeweils zum beidbeinigen Halten eines Geflügelkörpers (12) eingerichteten Hängeaufnahmen (13),
eine Linearmotor-Fördereinrichtung (16) mit einer einen Linearantrieb umfassenden, eine umlaufende Förderstrecke (17) bildenden Führungsschiene (18) mit einer Mehrzahl entlang der Führungsschiene (18) mittels des Linearantriebs jeweils separat steuerbewegbar angeordneten Läufern (19) sowie zur Aufnahme jeweils eines Geflügelbeines (21) eingerichtete Halteelemente (20), wobei an jedem der Läufer (19) jeweils eines der Halteelemente (20) angeordnet ist, und wobei
die Rundläufereinrichtung (10, 11) und die Linearmotor-Fördereinrichtung (16) derart angeordnet sind, dass die gekrümmte Förderstrecke in einem Überführungsbereich (22) mit einem Kurvenabschnitt der umlaufenden Förderstrecke (17) zur Übergabe des Schlachtgeflügels zwischen den Förderlinien zumindest teilweise überlappt.

2. Anordnung nach Anspruch 1, **dadurch gekennzeichnet, dass** die Linearmotor-Fördereinrichtung (16) eine Steuereinrichtung umfasst, die zum steuervariablen Fördern jeweils eines der Geflügelkörper (12) durch paarweises Bewegen eines Läuferpaares (19) ausgebildet ist, wobei das Läuferpaar jeweils zwei benachbarte der Läufer (19) umfasst.

3. Anordnung nach einem der Ansprüche 1 oder 2, **dadurch gekennzeichnet, dass** die Läufer (19) jeweils Positionsverfolgungsmittel zur Ermittlung der jeweiligen Läuferposition umfassen.

4. Anordnung nach einem der Ansprüche 1 bis 3, **dadurch gekennzeichnet, dass** die Steuereinrichtung eingerichtet ist, den Linearantrieb derart anzusteuern, dass jeweils der Abstand zwischen Halteelementen (20) der Läufer (19) eines der Läuferpaare zumindest im Wesentlichen einem vorgegebenen Läuferpaarabstand entspricht.

5. Anordnung nach einem der Ansprüche 3 oder 4, **dadurch gekennzeichnet, dass** die Steuereinrichtung eingerichtet ist, die Position und/oder die Geschwindigkeit mindestens eines der Läufer (19) jeweils eines der Läuferpaare auf Basis einer Positionssollvorgabe und/oder einer Geschwindigkeitssollvorgabe zu steuern.

6. Anordnung nach Anspruch 5, **dadurch gekennzeichnet, dass** die Steuereinrichtung weiter eingerichtet ist, die Position und/oder die Geschwindigkeit des jeweils anderen Läufers (19) jeweils eines der Läuferpaare unter Einhaltung des jeweiligen Läuferpaarabstandes nachzuführen.

7. Anordnung nach einem der Ansprüche 1 bis 6, **dadurch gekennzeichnet, dass** die Rundläufereinrichtung (10, 11) ein Antriebsaggregat umfasst und zumindest im Wesentlichen mit konstanter Umlaufgeschwindigkeit angetrieben ist.

8. Anordnung nach Anspruch 7, **dadurch gekennzeichnet, dass** die Rundläufereinrichtung (10, 11) zum Erfassen der Winkelposition, zum Erfassen der Ist-Umlaufgeschwindigkeit und zur Bestimmung der jeweiligen aktuellen Position mindestens einer der Hängeaufnahmen (13) eingerichtete Sensormittel umfasst.

9. Anordnung nach Anspruch 8, **dadurch gekennzeichnet, dass** die Steuereinrichtung ausgebildet ist, die Position und/oder die Geschwindigkeit der Läufer (19) eines Läuferpaares basierend auf der erfassten Ist-Umlaufgeschwindigkeit und der ermittelten aktuellen Position der mindestens einen Hängeaufnahme (13) derart zu steuern, dass jeweils eines der Halteelemente (20) der Läufer (19) zur Einzelbeinübergabe und der jeweiligen Hängeaufnahme (13) der Rundläufereinrichtung (10, 11) zeitgleich in dem Überführungsbereich (22) aufeinander treffen.

10. Anordnung nach einem der Ansprüche 1 bis 9, **dadurch gekennzeichnet, dass** die Rundläufereinrichtung (10) zum Überführen der Geflügelkörper (12) an die Linearmotor-Fördereinrichtung (16) eingerichtet ist und die Anordnung weiter eine zweite Rundläufereinrichtung (11) umfasst, die zum Überführen der Geflügelkörper (12) von der Linearmotor-Fördereinrichtung (16) an die zweite Rundläufereinrichtung (11) ausgebildet ist.

11. Verfahren zur Übergabe von Schlachtgeflügel zwischen Förderlinien in einer Geflügelbearbeitungsanlage, umfassend
Fördern von Schlachtgeflügel mittels mindestens einer zur Hängeförderung des Schlachtgeflügels ausgebildeten Rundläufereinrichtung (10, 11) entlang einer gekrümmten Förderstrecke, wobei die Geflügelkörper (12) von einer Mehrzahl von Hängeaufnahmen (13) der Rundläufereinrichtung (10, 11) jeweils beidbeinig gehalten werden,
Fördern des Schlachtgeflügels mittels einer einen Linearantrieb umfassenden Linearmotor-Fördereinrichtung (16) entlang einer durch eine Führungsschiene (18) gebildeten umlaufenden Förderstrecke (17) durch gesteuertes Bewegen einer Mehrzahl entlang der Führungsschiene (18) mittels des Linearantriebs jeweils separat steuerbewegbar angeordneten Läufern (19), wobei jeweils ein Geflügelbein (21) mittels jeweils an jedem der Läufer (19) angeordneten Halteelementen (20) gehalten wird,
Übergeben des Schlachtgeflügels zwischen den Förderlinien durch zumindest teilweises Überlappen der gekrümmten Förderstrecke der Rundläuferfördereinrichtung (10, 11) mit einem Kurvenabschnitt der umlaufenden Förderstrecke (17) in einem Überführungsbereich (22).

12. Verfahren nach Anspruch 11, **gekennzeichnet durch** steuervariables Fördern jeweils eines Geflügelkörpers (12) durch paarweises Bewegen eines Läuferpaares, wobei das Läuferpaar jeweils zwei benachbarte der Läufer (19) umfasst.

13. Verfahren nach einem der Ansprüche 11 oder 12, **gekennzeichnet durch** Ermitteln der jeweiligen Läuferposition mittels Positionsverfolgungsmitteln.

14. Verfahren nach einem der Ansprüche 11 bis 13, **gekennzeichnet durch** Steuern des Linearantriebs mittels einer Steuereinrichtung derart, dass jeweils der Abstand zwischen den Halteelementen (20) der Läufer (19) eines der Läuferpaare zumindest im Wesentlichen einem vorgegebenen Läuferpaarabstand entspricht.

15. Verfahren nach Anspruch 14, **gekennzeichnet durch** Steuern der Position und/ oder der Geschwindigkeit mindestens eines der Läufer (19) jeweils eines der Läuferpaare auf Basis einer Positionssollvorgabe und/oder einer Geschwindigkeitssollvorgabe.

16. Verfahren nach Anspruch 15, **dadurch gekennzeichnet, dass** die Steuereinrichtung weiter eingerichtet ist, die Position und/oder die Geschwindigkeit des jeweils anderen Läufers (19) jeweils eines der Läuferpaare unter Einhaltung des jeweiligen Läuferpaarabstandes nachzuführen.

17. Verfahren nach einem der Ansprüche 11 bis 16, **gekennzeichnet durch** Antreiben der Rundläufereinrichtung (10, 11) mit zumindest im Wesentlichen konstanter Umlaufgeschwindigkeit mittels eines Antriebsaggregats.

18. Verfahren nach einem der Ansprüche 11 bis 17, **gekennzeichnet durch** Erfassen der Winkelposition der Rundläufereinrichtung (10, 11), Erfassen der Ist-Umlaufgeschwindigkeit und Bestimmen der jeweiligen aktuellen Position mindestens einer der Hängeaufnahmen (13) mittels Sensormitteln.

19. Verfahren nach Anspruch 18, **gekennzeichnet durch** Steuern der Position und/ oder der Geschwindigkeit der Läufer (19) eines Läuferpaares mittels der Steuereinrichtung basierend auf der erfassten Ist-Umlaufgeschwindigkeit und der ermittelten aktuellen Position der mindestens einen Hängeaufnahme (13) derart, dass jeweils eines der Halteelemente (20) der Läufer (19) zur Einzelbeinübergabe und der jeweiligen Hängeaufnahme (13) der Rundläufereinrichtung (10) zeitgleich in dem Überführungsbereich aufeinander treffen.

20. Verfahren nach einem der Ansprüche 11 bis 19, **gekennzeichnet durch** Überführen der Geflügelkörper (12) von der Rundläufereinrichtung (10) an die Linearmotor-Fördereinrichtung (16) und Überführen der Geflügelkörper (12) von der Linearmotor-Fördereinrichtung (16) an eine zweite Rundläufereinrichtung (11).

## Claims

1. Arrangement for transferring slaughtered poultry between conveying lines in a poultry processing plant, comprising
at least one rotary device (10, 11) for conveying slaughtered poultry in a suspended state along a curved conveying path with a plurality of suspension mounts (13), each designed to hold a poultry body (12) by both legs,
a linear motor conveying device (16) with a guide rail (18) comprising a linear drive, forming a circulating conveying path (17) with a plurality of runners (19) each arranged to be separately controllable and movable along the guide rail (18) by means of the linear drive, and holding elements (20), designed to accommodate one poultry leg (21) at a time, wherein in each case one of the holding elements (20) is arranged on each of the runners (19), and wherein
the rotary device (10, 11) and the linear motor conveying device (16) are arranged in such a manner that the curved conveying path at least partially overlaps with a curved portion of the circulating conveying path (17) in a transfer region (22) for transferring the slaughtered poultry between the conveying lines.

2. Arrangement according to claim 1, **characterised in that** the linear motor conveying device (16) comprises a control device which is designed to convey one of the poultry bodies (12) at a time in a variably controllable manner by moving a pair of runners (19) in pairs, wherein the runner pair comprises two of the adjacent runners (19) in each case.

3. Arrangement according to any one of claims 1 or 2, **characterised in that** the runners (19) each comprise position tracking means to determine the runner position in each case.

4. Arrangement according to any one of claims 1 to 3, **characterised in that** the control device is configured to control the linear drive in such a manner that the distance in each case between holding elements (20) of the runners (19) of one of the runner pairs corresponds at least substantially to a predetermined runner pair spacing.

5. Arrangement according to any one of claims 3 or 4, **characterised in that** the control device is configured to control the position and/or the speed of at least one of the runners (19) of one of the runner pairs in each case based on a target position value and/or a target speed value.

6. Arrangement according to claim 5, **characterised in that** the control device is further configured to track the position and/or the speed of the respective other runner (19) of one of the runner pairs in each case while maintaining the respective runner pair spacing.

7. Arrangement according to any one of claims 1 to 6, **characterised in that** the rotary device (10, 11) comprises a drive unit and is driven at least substantially at constant circulation speed.

8. Arrangement according to claim 7, **characterised in that** the rotary device (10, 11) comprises sensor means configured to detect the angular position, to detect the actual circulation speed and to determine the respective current position of at least one of the suspension mounts (13).

9. Arrangement according to claim 8, **characterised in that** the control device is designed to control the position and/or the speed of the runners (19) of a runner pair based on the detected actual circulation speed and the determined current position of the at least one suspension mount (13) in such a manner that in each case one of the holding elements (20) of the runners (19) for single-leg transfer and the respective suspension mount (13) of the rotary device (10, 11) come together simultaneously in the transfer region (22).

10. Arrangement according to any one of claims 1 to 9, **characterised in that** the rotary device (10) is configured to transfer the poultry bodies (12) to the linear motor conveying device (16) and the arrangement further comprises a second rotary device (11) which is designed to transfer the poultry bodies (12) from the linear motor conveying device (16) to the second rotary device (11).

11. Method for transferring slaughtered poultry between conveying lines in a poultry processing plant, comprising
conveying slaughtered poultry by means of at least one rotary device (10, 11) designed for conveying the slaughtered poultry in a suspended state along a curved conveying path, wherein the poultry bodies (12) are each held by both legs by a plurality of suspension mounts (13) of the rotary device (10, 11),
conveying the slaughtered poultry by means of a linear motor conveying device (16), which comprises a linear drive, along a circulating conveying path (17) formed by a guide rail (18) by controlled movement of a plurality of runners (19) arranged along the guide rail (18), each runner being separately controllable and movable by means of the linear drive, wherein one poultry leg (21) in each case is held by means of holding elements (20), one each of which is arranged on each of the runners (19),
transferring of the slaughtered poultry between the conveying lines by at least partial overlapping of the curved conveying path of the rotary conveying device (10, 11) with a curved portion of the circulating conveying path (17) in a transfer region (22).

12. Method according to claim 11, **characterised by** conveying one of the poultry bodies (12) at a time in a variably controllable manner by moving a pair of runners in pairs, wherein the runner pair comprises two of the adjacent runners (19) in each case.

13. Method according to any one of claims 11 or 12, **characterised by** determining the respective runner position using position tracking means.

14. Method according to any one of claims 11 to 13, **characterised by** controlling the linear drive by means of a control device in such a manner that the distance in each case between the holding elements (20) of the runners (19) of one of the runner pairs corresponds at least substantially to a predetermined runner pair spacing.

15. Method according to claim 14, **characterised by** controlling the position and/or the speed of at least one of the runners (19) of one of the runner pairs in each case based on a target position value and/or a target speed value.

16. Method according to claim 15, **characterised in that** the control device is further configured to track the position and/or the speed of the respective other runner (19) of one of the runner pairs in each case while maintaining the respective runner pair spacing.

17. Method according to one of claims 11 to 16, **characterised by** driving the rotary device (10, 11) at at least substantially constant circulation speed by means of a drive unit.

18. Method according to any one of claims 11 to 17, **characterised by** using sensor means to detect the angular position of the rotary device (10, 11), detect the actual circulation speed and determine the respective current position of at least one of the suspension mounts (13).

19. Method according to claim 18, **characterised by** controlling the position and/or the speed of the runners (19) of a runner pair by means of the control device based on the detected actual circulation speed and the determined current position of the at least one suspension mount (13), in such a manner that in each case one of the holding elements (20) of the runners (19) for single-leg transfer and the respective suspension mount (13) of the rotary device (10) come together simultaneously in the transfer region.

20. Method according to any one of claims 11 to 19, **characterised by** transferring the poultry bodies (12) from the rotary device (10) to the linear motor conveying device (16) and transferring the poultry bodies (12) from the linear motor conveying device (16) to a second rotary device (11).

## Revendications

1. Agencement pour le transfert de volailles abattues entre des lignes de convoyage dans une installation de traitement de volailles, comprenant
au moins un dispositif rotatif (10, 11) pour le convoyage suspendu de volailles abattues le long d'un parcours de convoyage incurvé avec une pluralité de réceptacles de suspension (13) adaptés chacun pour le maintien d'une carcasse de volaille (12) par les deux pattes,
un dispositif de convoyage à moteur linéaire (16) avec un rail de guidage (18) comprenant un entraînement linéaire, formant un parcours de convoyage circulaire (17) avec une pluralité de curseurs (19) agencés le long du rail de guidage (18) de manière à pouvoir chacun être déplacés sous commande séparément au moyen de l'entraînement linéaire, ainsi que des éléments de maintien (20) adaptés pour recevoir chacun une patte de volaille (21), un des éléments de maintien (20) étant agencé respectivement sur chacun des curseurs (19), et
le dispositif rotatif (10, 11) et le dispositif de convoyage à moteur linéaire (16) étant agencés de telle sorte que le parcours de convoyage incurvé chevauche au moins partiellement une section courbe du parcours de convoyage circulaire (17) dans une zone de transfert (22) pour le transfert de la volaille abattue entre les lignes de convoyage.

2. Agencement selon la revendication 1, **caractérisé en ce que** le dispositif de convoyage à moteur linéaire (16) comprend un dispositif de commande configuré pour transporter de manière variable sous commande respectivement l'une des volailles (12) par déplacement par paire d'une paire de curseurs (19), la paire de curseurs comprenant respectivement deux des curseurs (19) voisins.

3. Agencement selon l'une quelconque des revendications 1 ou 2, **caractérisé en ce que** les curseurs (19) comprennent chacun des moyens de suivi de position pour déterminer la position respective des curseurs.

4. Agencement selon l'une quelconque des revendications 1 à 3, **caractérisé en ce que** le dispositif de commande est adapté pour commander l'entraînement linéaire de telle sorte que l'espacement entre les éléments de maintien (20) des curseurs (19) de l'une des paires de curseurs corresponde au moins essentiellement à un espacement des paires de curseurs prédéfini.

5. Agencement selon l'une quelconque des revendications 3 ou 4, **caractérisé en ce que** le dispositif de commande est adapté pour commander la position et/ou la vitesse d'au moins un des curseurs (19) de chacune des paires de curseurs sur la base d'une consigne de position et/ou d'une consigne de vitesse.

6. Agencement selon la revendication 5, **caractérisé en ce que** le dispositif de commande est en outre adapté pour asservir la position et/ou la vitesse de l'autre curseur (19) de chacune des paires de curseurs en respectant l'espacement respectif des paires de curseurs.

7. Agencement selon l'une quelconque des revendications 1 à 6, **caractérisé en ce que** le dispositif rotatif (10, 11) comprend un groupe d'entraînement et est entraîné au moins essentiellement à vitesse de circulation constante.

8. Agencement selon la revendication 7, **caractérisé en ce que** le dispositif rotatif (10, 11) comprend des moyens de détection adaptés pour détecter la position angulaire, pour détecter la vitesse de circulation réelle et pour déterminer la position actuelle respective d'au moins un des réceptacles de suspension (13).

9. Agencement selon la revendication 8, **caractérisé en ce que** le dispositif de commande est configuré pour commander la position et/ou la vitesse des curseurs (19) d'une paire de curseurs sur la base de la vitesse de circulation réelle détectée et de la position actuelle déterminée de l'au moins un réceptacle de suspension (13) de telle sorte que l'un des éléments de maintien (20) des curseurs (19) pour le transfert d'une seule patte et le réceptacle de suspension (13) respectif du dispositif rotatif (10, 11) se rencontrent simultanément dans la zone de transfert (22).

10. Agencement selon l'une quelconque des revendications 1 à 9, **caractérisé en ce que** le dispositif rotatif (10) est adapté pour transférer les carcasses de volaille (12) au dispositif de convoyage à moteur linéaire (16) et l'agencement comprend en outre un deuxième dispositif rotatif (11) qui est configuré pour transférer les carcasses de volaille (12) du dispositif de convoyage à moteur linéaire (16) au deuxième dispositif rotatif (11).

11. Procédé de transfert de volailles abattues entre des lignes de convoyage dans une installation de traitement de volailles, comprenant
le convoyage de volailles abattues au moyen d'au moins un dispositif rotatif (10, 11) configuré pour le convoyage suspendu des volailles abattues le long d'un parcours de convoyage incurvé, les carcasses de volailles (12) étant maintenus par une pluralité de réceptacles de suspension (13) du dispositif rotatif (10, 11) respectivement par les deux pattes,
le convoyage de la volaille abattue au moyen d'un dispositif de convoyage à moteur linéaire (16) comprenant un entraînement linéaire, le long d'un parcours de convoyage circulaire (17) formé par un rail de guidage (18), par déplacement commandé d'une pluralité de curseurs (19) agencés le long du rail de guidage (18) de manière à pouvoir chacun être déplacés sous commande séparément au moyen de l'entraînement linéaire, une patte de volaille (21) étant maintenue au moyen d'éléments de maintien (20) agencés respectivement sur chacun des curseurs (19),
le transfert de la volaille abattue entre les lignes de convoyage par chevauchement au moins partiel du parcours de convoyage incurvé du dispositif de convoyage rotatif (10, 11) avec une section courbe du parcours de convoyage circulaire (17) dans une zone de transfert (22).

12. Procédé selon la revendication 11, **caractérisé par** un convoyage variable sous commande d'une carcasse de volaille (12) par déplacement par paire d'une paire de curseurs, la paire de curseurs comprenant respectivement deux des curseurs (19) voisins.

13. Procédé selon l'une quelconque des revendications 11 ou 12, **caractérisé par** la détermination de la position respective des curseurs au moyen de moyens de suivi de position.

14. Procédé selon l'une quelconque des revendications 11 à 13, **caractérisé par** la commande de l'entraînement linéaire au moyen d'un dispositif de commande de telle sorte que l'espacement entre les éléments de maintien (20) des curseurs (19) de l'une des paires de curseurs corresponde respectivement au moins essentiellement à un espacement des paires de curseurs prédéfini.

15. Procédé selon la revendication 14, **caractérisé par** la commande de la position et/ou de la vitesse d'au moins un des curseurs (19) de chacune des paires de curseurs sur la base d'une consigne de position et/ou d'une consigne de vitesse.

16. Procédé selon la revendication 15, **caractérisé en ce que** le dispositif de commande est en outre adapté pour asservir la position et/ou la vitesse de l'autre curseur (19) de chacune des paires de curseurs en respectant l'espacement respectif des paires de curseurs.

17. Procédé selon l'une quelconque des revendications 11 à 16, **caractérisé par** l'entraînement du dispositif rotatif (10, 11) à une vitesse de circulation au moins essentiellement constante au moyen d'un groupe d'entraînement.

18. Procédé selon l'une quelconque des revendications 11 à 17, **caractérisé par** la détection de la position angulaire du dispositif rotatif (10, 11), la détection de la vitesse de circulation réelle et la détermination de la position actuelle respective d'au moins l'un des réceptacles de suspension (13) au moyen de moyens de détection.

19. Procédé selon la revendication 18, **caractérisé par** la commande de la position et/ou de la vitesse des curseurs (19) d'une paire de curseurs au moyen du dispositif de commande sur la base de la vitesse de circulation réelle détectée et de la position actuelle déterminée de l'au moins un réceptacle de suspension (13) de telle sorte que l'un des éléments de maintien (20) des curseurs (19) pour le transfert d'une seule patte et le réceptacle de suspension (13) respectif du dispositif rotatif (10) se rencontrent simultanément dans la zone de transfert.

20. Procédé selon l'une quelconque des revendications 11 à 19, **caractérisé par** le transfert des carcasses de volailles (12) du dispositif rotatif (10) au dispositif de convoyage à moteur linéaire (16) et par le transfert des carcasses de volailles (12) du dispositif de convoyage à moteur linéaire (16) à un deuxième dispositif rotatif (11).
